(19)

**Europäisches Patentamt**
**European Patent Office**
**Office européen des brevets**

(11) **EP 3 296 783 B1**

(12) **EUROPEAN PATENT SPECIFICATION**

(45) Date of publication and mention
of the grant of the patent:
**29.11.2023 Bulletin 2023/48**

(51) International Patent Classification (IPC):
**G02B 6/34** *(2006.01)*     **G02B 6/30** *(2006.01)*
**G02B 6/124** *(2006.01)*

(21) Application number: **17190594.6**

(22) Date of filing: **12.09.2017**

(52) Cooperative Patent Classification (CPC):
**G02B 6/34; G02B 6/30;** G02B 6/124; G02B 6/305;
G02B 2006/12107

(54) **INTEGRATED PHOTONICS WAVEGUIDE GRATING COUPLER**

INTEGRIERTER PHOTONIKWELLENLEITERGITTERKOPPLER

COUPLEUR DE RÉSEAU DE GUIDES D'ONDES PHOTONIQUES INTÉGRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2016 EP 16188977**

(43) Date of publication of application:
**21.03.2018 Bulletin 2018/12**

(73) Proprietor: **IMEC vzw**
**3001 Leuven (BE)**

(72) Inventors:
• **SONG, Jeonghwan**
**3001 Leuven (BE)**
• **ROTTENBERG, Xavier**
**3001 Leuven (BE)**

(74) Representative: **Patent Department IMEC**
**IMEC vzw**
**Patent Department**
**Kapeldreef 75**
**3001 Leuven (BE)**

(56) References cited:
WO-A1-2013/037900     WO-A1-2016/131355
GB-A- 2 423 829     US-A- 5 818 986
US-A1- 2011 188 808     US-A1- 2014 010 498

• **Jeong Hwan Song ET AL: "Low-Back-Reflection
Grating Couplers Using Asymmetric Grating
Trenches", IEEE PHOTONICS TECHNOLOGY
LETTERS., vol. 29, no. 4, 9 January 2017
(2017-01-09), pages 389-392, XP055444571, US
ISSN: 1041-1135, DOI: 10.1109/LPT.2017.2650558**
• **Yun Wang ET AL: "Focusing sub-wavelength
grating couplers with low back reflections for
rapid prototyping of silicon photonic circuits",
Optics Express, vol. 22, no. 17, 25 August 2014
(2014-08-25), page 20652, XP055662880, US ISSN:
1094-4087, DOI: 10.1364/OE.22.020652**
• **SONG JEONG HWAN ET AL: "Back-Reflection
Free Grating Couplers on Silicon-on-Insulator",
ECOC 2016; 42ND EUROPEAN CONFERENCE ON
OPTICAL COMMUNICATION, 5 December 2016
(2016-12-05), XP055970426, Retrieved from the
Internet:
URL:https://ieeexplore.ieee.org/stampPDF/g
etPDF.jsp?tp=&arnumber=7767818&ref=aHR0c
HM
6Ly9pZWVleHBsb3JlLmllZWUub3JnL2RvY3VtZ
W50L zc3Njc4MTg=>**

EP 3 296 783 B1

## Description

### Field of the invention

The present invention is generally related to the field of integrated photonics.

### Background of the invention

Photonic integration is considered to be a key technology for future advancement in optical communication technology. Scaling down of the optical building blocks enables cost-effective, complex and ultra-compact photonic circuits, i.e. chips which comprise integrated optical components formed on or in a substrate and which are interconnected by planar waveguides. It is typically desirable to be able to optically couple the signals conducted by such planar waveguides into or out of the integrated chip, for example from or into an optical fibre.

Choosing an appropriate platform for developing this miniaturization technology is guided by functionality, compatibility, performance, yield and cost. Currently, silicon-on-insulator (SOI) can be considered as the leading technology for low-cost and high- volume photonic integration, since it benefits from processes developed in the mature electronics industry. Although the high refractive index contrast of SOI reduces the footprint of integrated photonic devices considerably, it becomes more difficult to achieve a high-performance mode-size convertor between a single-mode optical fibre, with a typical cross-sectional area of 100 $\mu$m$^2$, and an on-chip integrated optical waveguide, with a typical cross-sectional area in the order of 0.1 $\mu$m$^2$.

A possible solution is a grating coupler, which is a periodic structure that interconnects a SOI based photonic integrated circuit (PIC) device and an optical fibre or the free space. Fibre-to-chip grating couplers with very high efficiency have been demonstrated. However, a typical reflection back into the on-chip waveguide for such a high-efficiency grating coupler may be around -17dB, while high back-reflections of -10dB and -8dB have been reported as well. These levels of back-reflection may be unacceptable for integrated circuits, especially for example for circuits which contain integrated lasers or which implement interferometer-based designs.

Minimizing back-reflection to the optoelectronic devices is critical for the highfrequency modulation performance of laser integrated silicon photonic modules. For example, optical back-reflection excites external cavity modes and induces intensity noise in a laser. Moreover, back-reflections are highly undesirable to interferometer based devices. The back-reflection also causes instabilities and errors in PIC measurements. The back-reflection comes from two major sources. The first and dominant reason is the second order reflection of the grating coupler. This can be suppressed by setting 10 degree tilt of the coupling angle between a fibre and PIC surface. The other source of back reflection is the Fresnel reflection on the boundary between the input waveguide and the grating coupler. The Fresnel reflection can be described as the reflection occurring when light is moving between different refractive index media. For the grating coupler, the effective index of the grating area (Bloch mode) and the slab area can be these different media. The reduction of the Fresnel reflection in the grating coupler is not easy to achieve, as it depends a lot on the grating structure itself.

In the paper "Efficient broadband silicon-on-insulator grating coupler with low backreflection" (N. Na et al, Opt. Letters, Vol.36, Issue 11, pp.2101-2103, 2011) a grating coupler using a rib waveguide mode adiabatically coupled to the slab waveguide mode by a rib tip has been proposed. The back-reflection was determined to be -27 dB for a 1310 nm wavelength with TE polarization. This is still a relatively high value.

Another approach to combat back-reflections, as disclosed in WO 2013/037900, involves the use of a tilted elliptical-grating coupler design, which is reflectionless by refocusing the reflected light away from the entrance waveguide, whereby back-reflections can be lowered to about -40dB. The coupler does not include a taper structure between the grating area and the input waveguide. The mode on the slab waveguide cannot be confined by waveguide side walls. Therefore, the mode can be broadened and consequently less coupling occurs to the grating trench area.

Another method for reducing back reflection relies on an apodization technique on grating couplers. The effective index of the Bloch mode on grating coupler is gradually changed on the boundary between slab and grating areas. The boundary area works as a buffer and it helps backreflection reduction. Apodized grating couplers need narrow trenches fabricated by electron beam process, otherwise, they need several etch steps.

Consequently, there is a need for a grating coupler so designed that the back-reflections are as low as possible.

### Summary of the invention

It is an object of embodiments of the present invention to provide for a photonic integrated device comprising a grating coupler with low back-reflection.

The invention is defined by claim 1. Advantageous embodiments are defined in the dependent claims.

The proposed solution indeed allows for a device with low back-reflections. The asymmetric grating trenches change the angle of the reflected light path.

In an embodiment the photonic integrated device comprises a taper. In order to minimise back reflections at least one of the elongate grating trenches has in one embodiment a length determined by the equation

$$R = \frac{N\lambda/n_{eff}}{1 - e\cos\psi}$$

where R denotes the distance to the centre of the waveguide radiation exit surface, $\lambda$ the wavelength, N an integer, $n_{eff}$ the effective index of the elongate grating trench, $\psi$ the angle of the taper and e the eccentricity, given by $e = n_{fibre}\sin\theta/n_{eff}$ (with $n_{fibre}$ the effective index of the fibre mode and $\theta$ the output fibre angle)

The grating structure comprises a plurality of curved elongate grating trenches.

In a preferred embodiment the photonic substrate is a silicon-on-insulator substrate.

In one embodiment the plurality of elongate grating trenches comprises etched lines in said photonic substrate.

In an embodiment the plurality of elongate grating trenches comprises deposited materials on top of the photonic substrate.

In another aspect the invention relates to an optical system for guiding radiation. The optical system comprises a photonic integrated device as previously described and an optical fibre in optical communication with the photonic integrated device in order to collect radiation directed from the waveguide by the grating.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, wherein like reference numerals refer to like elements in the various figures.

Fig.1 illustrates an embodiment of a device according to the invention.
Fig.2 illustrates more details on the design of the grating structure.
Fig.3 illustrates asymmetric effective index distribution along the x-direction.
Fig.4 illustrates the operating principle of the proposed grating coupler.
Fig.5 illustrates various shapes of the grating coupler obtained by varying the angle $\phi$.
Fig.6 illustrates some more possible implementations of a grating coupler not being part of the claimed invention.
Fig.7 shows a side view of a device according to the invention.
Fig.8 shows the modelling parameters.
Fig.9 illustrates the average back reflection at 1 dB bandwidth as a function of the angle
Fig.10 illustrates a comparison of back reflection spectra from a grating coupler according to the invention and a conventional grating coupler.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention presents a photonics integrated device which has a grating coupler so shaped that back-reflections into the waveguide are considerably reduced.

Where in embodiments of the present application reference is made to a photonics integrated circuit (PIC) or photonics integrated device, this refers to a variety of forms and material systems such as for example low-index contrast waveguide platforms (e.g. polymer waveguides, glass/silica waveguides, $Al_xGa_{1-x}As$ waveguides, $In_xGa_{1-x}As_yP_{1-y}$ waveguides), high-index contrast waveguides (e.g. Silicon-on-Insulator, semiconductor membranes), plasmonic waveguides (e.g. metal nano-particle arrays, metal layers), also called Photonic Lightwave circuits (PLC). Another particular example of a useable platform is the SiN platform. Photonic integrated circuits or photonic integrated devices according to embodiments of the present invention comprise at least an integrated waveguide and a grating. Typically further components are also present, such as for example but not limiting to an integrated optical cavity, an integrated optical resonator, an integrated optical interferometer, a further integrated optical coupler, a further waveguide, a taper, a tuneable filter, a phase-shifter, a further grating structure, a modulator, a detector, a source, a multiplexer, a demultiplexer or a combination thereof. The optical components can be active or passive. The components can be integrated for example monolithically, heterogeneously or hybridly. Monolithical integration is the integration technology that uses a single processing flow to process the diverse components potentially using different materials, e.g. integrated germanium detectors in silicon photonics IC. Heterogeneous integration is the integration technology for which the components are processed in separate process flows, which are then integrated at die or wafer level, e.g. BCB bonding, wafer bonding and other bonding schemes, 3D integration. Hybrid integration is the integration of components or materials on processed photonic integrated platforms, e.g. flip-chipping of detectors, bumping, gluing, wire bonding, co-packaging, etc.

The devices of the present invention are further described for the particular case of an SOI (Silicon-on-Insulator) material system, also referred to as silicon photonics system. However, the devices of the present invention can be based on other material systems, such as for example III-V material systems, metallic layers, low index contrast material systems or a combination thereof.

Silicon-on-Insulator is a very interesting material system for highly integrated photonic circuits. The high refractive index contrast allows photonic waveguides and waveguide components with submicron dimensions to guide, bend and control light on a very small scale so that various functions can be integrated on a chip. Moreover SOI offers a flexible platform for integration with surface plasmon based components which in turn allows for even higher levels of miniaturization. Both waveguide types allow a high level of miniaturization, which is advantageous. Furthermore for both waveguide types light can be efficiently coupled in and out the PIC by use of grating.

Using Silicon-on-Insulator also has some technological advantages. Due to the CMOS industry, silicon technology has reached a level of maturity that outperforms any other plane chip manufacturing technique by several orders of magnitude in terms of performance, reproducibility and throughput. Nano-photonic ICs can be fabricated with wafer scale-processes, meaning that a wafer can contain a high amount of photonic integrated circuits. Combined with the commercial availability of large wafers at a relative moderate cost, this means that the price per photonic integrated circuit can be very low.

Where in embodiments not being part of the claimed invention reference is made to a linear or 1D grating, reference is made to a grating wherein the grating lines have a substantially straight shape, i.e. they extend substantially in one direction in the plane of the photonics integrated device. Where in embodiments according to the present invention reference is made to a curved grating, reference is made to a grating wherein the grating lines have a substantially curved shape, i.e. they extend substantially in two directions in the plane of the photonics integrated device.

In a first aspect the present invention relates to photonics integrated devices, also referred to as photonic integrated circuits (PIC), comprising a grating structure and integrated waveguide for coupling light from an integrated waveguide to an optical fibre or to free space. The photonic integrated device comprises a waveguide embedded in the photonic substrate. The waveguide has a waveguide radiation exit surface and is optically connected to a two-dimensional grating. The two-dimensional grating structure, which is part of the photonic integrated device, has a plurality of curved elongate scattering elements and is adapted for diffracting radiation received from the waveguide towards a direction out of said photonic substrate.

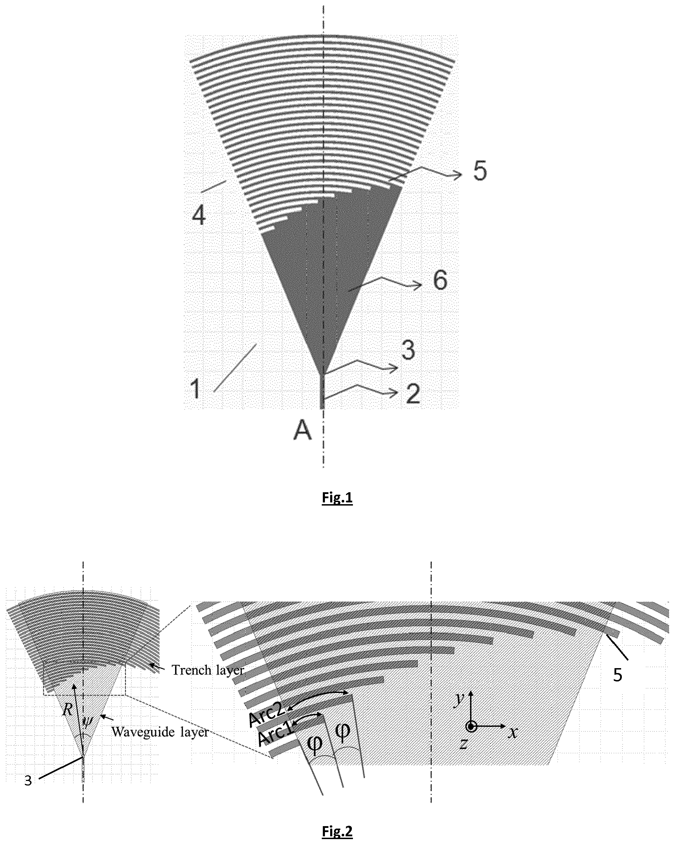

Fig.1 illustrates a first exemplary embodiment of a photonic integrated device 1 according to the invention. The photonic integrated device 1 comprises a waveguide 2 embedded in a photonic substrate. As indicated above, the photonic integrated device may be based on a silicon-on-insulator (SOI) substrate, although embodiments of the present invention are not limited thereto. Optionally, the photonic integrated device 1 may furthermore comprise other components, such as for example an integrated laser optically connected to this waveguide 2. The waveguide may be a slab waveguide or a taper waveguide. In the embodiment of Fig.1 a taper 6 is used.

The waveguide 2 may for example be a single-mode integrated waveguide, e.g. a broad waveguide in a SOI substrate. This waveguide 2 may have an end portion, for example directed along a waveguide axis A. The end portion further is referred to as the waveguide radiation exit surface 3. It is to be noted that the present description makes use of the concept of outcoupling of the radiation out of the photonic integrated device, but that an alternative description could equally be provided for radiation coupled in and the components and device described in embodiments of the present invention can equally be used for radiation incoupling in the photonic integrated device. The waveguide is in optical communication with a grating structure, also being part of the photonic integrated device. To be more precise, the waveguide is in optical communication with the grating via a waveguide radiation exit surface 3. The waveguide radiation exit surface may for example be the abutting end of the end portion of the waveguide.

The one-dimensional or two dimensional grating structure may be part of a guiding portion of optically conductive material. The guiding portion may be a region in a planar slab of the photonic substrate, e.g. in a continuation of the photonic substrate wherein the waveguide 2 is embedded.

In an advantageous embodiment the grating coupler is fabricated on a silicon nitride ($Si_xN_y$) waveguide platform. $Si_xN_y$ waveguide platforms are commonly used as photonic integrated circuit due to their wide range of transparency for visible and near infrared (NIR) light, low propagation loss and relaxed lithography requirements due to relatively large critical dimensions. Additionally, $Si_xN_y$ does not suffer from free carrier and two-photon absorption. $Si_xN_y$ waveguides also have less temperature sensitivity than Si waveguides. Furthermore, the bandwidth of $Si_xN_y$ grating couplers is much wider than that of Si grating couplers.

The grating structure 4 is adapted for diffracting radiation, e.g. light, received from the waveguide 2 towards a direction out of the photonic substrate, for example, in a direction having a substantial normal component relative to a surface of the guiding portion. A two-dimensional grating 4 comprises a plurality of curved elongate scattering elements 5, which are curved such that a plain wavefront travelling through a TE-polarized mode or TM-polarized of the waveguide 2 may be phase-matched to, for example, a tilted optical fibre positioned in said direction out of the photonic substrate. These elongate scattering elements 5 may comprise etched lines in the photonic substrate. Alternatively or additionally, this plurality of elongate scattering elements may comprise deposited materials such as for example - embodiments of the present invention not being limited thereto - silicon lines or metal lines, e.g. deposited gold lines, on top of a photonic substrate.

In the present invention it is proposed to reduce the back-reflections by asymmetrically etching the grating trenches on the grating coupler or in the photonic substrate. The asymmetric grating trenches contribute in changing the angle of light path and work e.g. in a two-dimensional implementation like a curved mirror. Consequently, back-reflections can be reduced. The asymmetrical etching translates into grating trenches having a different angle of arc with respect to the centre of the waveguide radiation exit surface.

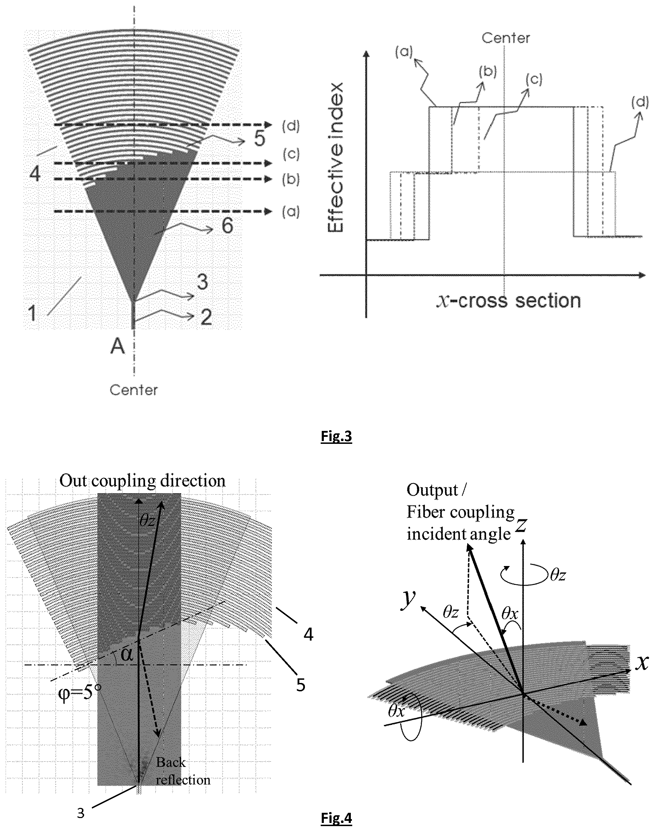

Fig.2 shows the proposed grating coupler design and design parameters. The curved circular elongate scattering elements of Fig.2 obviously each have a different distance to the centre of the waveguide radiation exit surface. To reduce the Fresnel reflection in the grating coupler, the curved boundary has been devised as shown in Fig.2. The difference in angle of arc between adjacent grating trenches is indicated by an angle $\varphi$. In this embodiment the difference in angle between adjacent trenches is constant. In general, this is however not necessarily the case and the difference in angle between adjacent trenches may vary from one pair of trenches to another pair. The effective index of Bloch mode on the grating coupler is not symmetric anymore : the asymmetric grating trenches of the present invention give rise to an asymmetric effective index distribution along the x-direction as shown in Fig.3. Fig.3 illustrates one still has a symmetric distribution in the x-direction of in cases (a) and (d), where the cross-section is taken completely in the taper (6) and in the part with grated trenches between the extremities of the taper, respectively. In cases (b) and (c), on the contrary, only a part of the cross-section is in the grated trenches part. As a consequence, the effective index distribution along the x-direction now becomes asymmetric. The curved boundary between asymmetric Bloch mode area and slab area (with taper) is a curved mirror. Light from the entrance waveguide is reflected by the curved boundary and the direction of reflection is changed simultaneously as shown in Fig.4(a). Thus, the back reflection is reduced. Fig.4b shows the coordinate system.

To minimize back reflections, the length of the grating trench is parameterized by using the parameter of $\phi$ as shown in Fig.2. The taper radius $R$ and angle $\psi$ can be determined by the equation

$$R = \frac{N\lambda/n_{eff}}{1 - e\cos\psi}$$

where N is an integer, $n_{eff}$ is the effective index of Bloch mode (grating region) and e the eccentricity, $e = n_{fiber}\sin\theta/n_{eff}$.

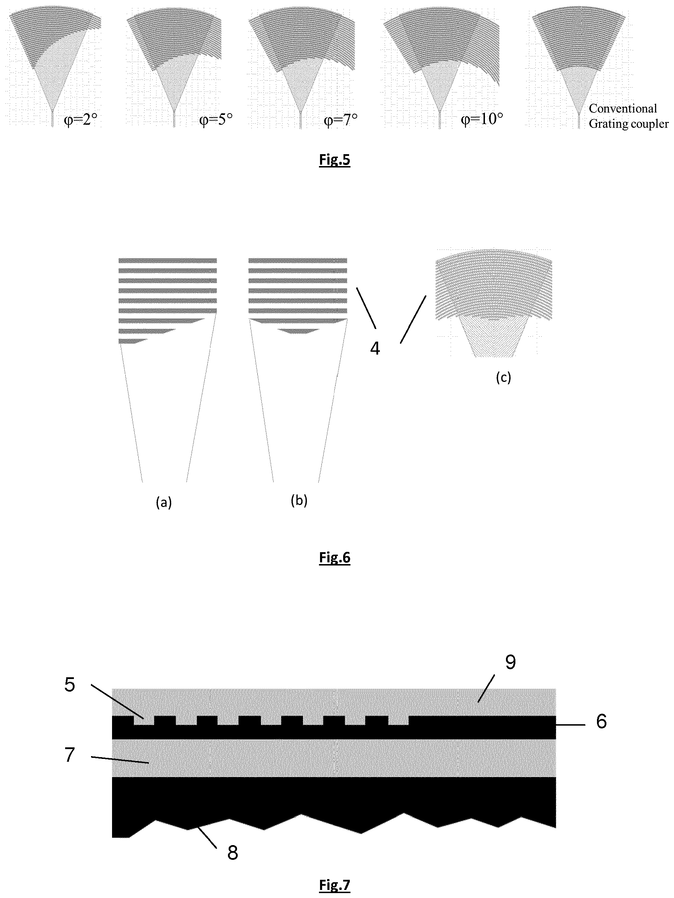

Here, $n_{fiber}$, $\lambda$ and $\vartheta$ are the effective index of the fibre mode, wavelength and the output-fibre angle (set to be 10 degrees), respectively. The R value is set to be about 17$\mu$m, when the slab angle $\psi$ is 45°. Here, the effective index of the grating region for 1.55$\mu$m is found to be 2.6. The curved boundary can be controlled by a single angular parameter $\varphi$ in case the difference in angle between adjacent trenches is constant. Fig.5 shows the shapes of grating couplers defined by $\varphi$.

In an embodiment of a photonic integrated device according to the invention a taper structure 6 is provided (see e.g. Fig.1). The coupling efficiency of a grating coupler having a taper structure is higher than that that of a grating coupler having a slab. The characteristics of back-reflections on a conventional grating coupler are similar in case one has a taper or a slab.

Fig.6 shows some more possible shapes the grating coupler of the photonics integrated device can take in embodiments not being part of the present invention. In Fig.6a and 6b a linear grating with a long taper is applied. The grating in Fig.6b has a centre trench. Also the grating coupler in Fig.6c comprises such a centre trench. Note that in embodiments with linear gratings the distance to the centre of the waveguide radiation exit surface can be defined in various ways. A convenient way is to simply take the shortest distance from the centre of the exit surface to a point of the grating trench.

Fig.7 provides a side view of an embodiment of the device of this invention. The grating region 5 and the taper region 6 are indicated. A buried oxide (BOX) layer 7 is provided on top of the silicon substrate 8 as an undercladding. The BOX layer is critical for the directionality. On top of the grating trenches 5 a top cladding 9 is provided.

An optical system for analyzing the back-reflection mechanism can be modelled by a ray transfer matrix assuming that the backreflection in a conventional design with symmetric grating trenches is unity. The final radius of mode size $\omega_2$ and the coupling angle to the input waveguide $\vartheta_2$ can be determined by applying a ray transfer matrix to the vector containing the radius of the mode size from the entrance waveguide $\omega$ and the incident angle $\vartheta$.

$$\begin{vmatrix} \omega_2 \\ \theta_2 \end{vmatrix} = \begin{vmatrix} A & B \\ C & D \end{vmatrix} \begin{vmatrix} \omega \\ \theta \end{vmatrix} \tag{1}$$

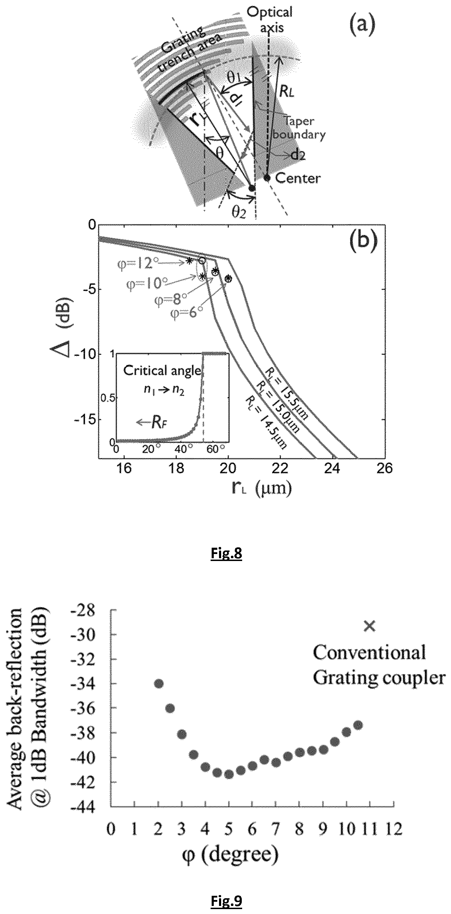

The ray transfer matrix build-up shown in (2) is composed of a curved mirror with a taper boundary assumed to be a mirror to obtain angle values. The modelling parameters are shown in Fig.8(a).

$$\begin{vmatrix} A & B \\ C & D \end{vmatrix} = \begin{vmatrix} 1 & d_2 \\ 0 & 1 \end{vmatrix}\begin{vmatrix} 1 & 0 \\ 0 & 1 \end{vmatrix}\begin{vmatrix} 1 & d_1 \\ 0 & 1 \end{vmatrix}\begin{vmatrix} 1 & 0 \\ -\dfrac{2}{R_L} & 1 \end{vmatrix}\begin{vmatrix} 1 & r_L \\ 0 & 1 \end{vmatrix}$$
$$= \begin{vmatrix} 1 - \dfrac{2(d_1+d_2)}{R_L} & [1 - \dfrac{2(d_1+d_2)}{R_L}]r_L + d_1 + d_2 \\ -\dfrac{2}{R_L} & -\dfrac{2}{R_L}r_L + 1 \end{vmatrix} \tag{2}$$

$d_1$ and $d_2$ are the lengths from the curved mirror to the boundary of the taper and from the boundary of the taper to the entrance waveguide, respectively. $r_L$ is the radius of the grating trench at the centre of the taper waveguide. $R_L$ is the radius of curvature of the effective curved boundary formed by the asymmetric grating trench. The mode size $\omega_2$ can be solved as a Gaussian beam,

$$\omega_2 = A\omega \sqrt{1 + (\frac{\lambda B}{A\pi\omega^2})^2} \tag{3}$$

From Equation (3) $\omega$ increases until reaching the first grating trench and is then reflected at the curved interface formed by the asymmetric trenches. $\omega$ subsequently decreases until reaching the focal length of $R_L/2$ with a reflecting angle of $\vartheta_1$. After reaching this focal length, the mode size again increases. After a propagation distance of $d_1$, the propagating mode is reflected or transmitted at the interface between the taper wall and oxide cladding and finally arrive at the entrance waveguide.

However, the mode size $\omega_2$ can be assumed to be the same as the value of the initial mode size $\omega$ because the waveguide taper converts it to that size. Thus, the propagating mode size is matched with the initial mode size at the entrance waveguide. Therefore, (3) can be simplified to

$$\omega_2 \approx \omega \qquad (4)$$

The propagation angle of $\omega_2$ is different from that of the initial mode. Thus, the final angle can be written as

$$\theta_2 = -\frac{2}{R_L}\omega + (-\frac{2}{R_L}r_L + 1)\theta. \qquad (5)$$

Here, the incident angle $\vartheta$ is equal to half the taper angle ($\psi/2$).

Losses can occur due to angular misalignment and a power penalty at the boundary between the taper wall and the oxide cladding. The loss due to angular misalignment can be written as

$$\eta_\theta = exp\left(-\frac{k^2\theta_2{}^2}{2}\frac{\frac{1}{\omega^2}+\frac{1}{\omega_2{}^2}}{\left(\frac{1}{\omega^2}+\frac{1}{\omega_2{}^2}\right)^2+\frac{k^2}{4}\left(\frac{1}{r_L}-\frac{1}{R_L}\right)^2}\right) \qquad (6)$$

where $\eta$ is the coupling efficiency between initial and final modes when the coupling angles are different. $k = 2\pi/\lambda$. $r_L$ and $R_L$ are assumed to be the radii of mirror surfaces. Thus, $r_L$ and $R_L$ can be treated as wavefront curvature radii. The power penalty at the taper boundary can be expressed using Fresnel equations for the TE mode.

$$T_F = \left(\frac{n_2 cos(\theta_t)}{n_1 cos(\pi/2-\theta_1)}\right)\left(\frac{2n_1 cos(\pi/2-\theta_1)}{n_1 cos(\pi/2-\theta_1)+n_2 cos(\theta_t)}\right)^2 \qquad (7)$$

$$R_F = 1 - T_F = \left(\frac{n_1 cos(\pi/2-\theta_1)-n_2 cos(\theta_t)}{n_1 cos(\pi/2-\theta_1)+n_2 cos(\theta_t)}\right)^2 \qquad (8)$$

$T_F$ and $R_F$ indicate the transmission through a medium with index of refraction $n_2$ and the Fresnel reflection at the side wall of taper, respectively. $\Theta_t$ is the transmitted angle which can be calculated from Snell's law : $n_1 sin(\pi/2-\Theta_1) = n_2 sin(\Theta_t)$. $\Theta_1 = \Theta_2$. The back-reflected power difference from the conventional design ($\varphi = 45°$) can be written as

$$\Delta = 1 - \eta_\theta R_F \qquad (9)$$

Fig.8b shows the back-reflection power difference between the conventional and asymmetric grating couplers as a function of the length of $r_L$. The effective $R_L$ is assumed to be about 15 µm. The values of $r_L$ are in the range 18 to 20 µm. The incident angle $\vartheta$ is 22.5°. The mode diameter of $2\omega$ is assumed to be 1.25 µm. $\vartheta_2$ is calculated to be 31.5° - 37.5° when $r_L$ is varying from 18 µm to 20 µm, respectively. Fig.8b also illustrates the results when different values of $R_L$ are used for the design of asymmetric grating trenches. For better characteristics, a design of using a decreased $R_L$ and increased $r_L$ is expected to produce further improvement in the back-reflection characteristics of the asymmetric grating couplers. Wider taper angles help reducing back-reflections further because the incident angle $\vartheta$ is increased. If the distance between the centre of $R_L$ and $r_L$ is increased, the reflecting angle $\vartheta_1$ is increased and the Fresnel reflection at the taper is decreased accordingly. Using a slab waveguide instead of a taper is yet another possibility for reducing back-reflections. The lack of a guiding taper causes the reflected beam to expand, thus resulting in mode size mismatch with respect to the input mode and therefore less coupling of back-reflected light. Furthermore without the taper walls but with asymmetric grating trenches, the light is reflected back at an angle and not funneled back to the input waveguide. The resulting lateral offset from the input waveguide due to the beam trajectory and the phase mismatch due to the beam angle will further decrease the coupling of back-reflected light. However, there exists a trade-off between the reduced back-reflection achieved with a slab waveguide and the overall efficiency of the grating coupler.

The performance of the proposed solution has been verified with a three-dimensional finite difference time domain (3D-FDTD) method. For this 3D-FDTD simulation substrateless structures are used for the purpose of fast calculations. Only the transverse electric (TE) mode is considered as a light source. The oxide thickness is 1µm from the top to the end surface, which includes all cladding layers. The refractive index is set to be 1.45. The silicon waveguide is located in the middle of the oxide with 220nm thickness with refractive index of 3.47 for 1.55$\mu$m wavelength. The grating structures have 630nm pitch with 50% duty cycle and 70nm shallow etch depth, which are well-known parameter values for conventional grating couplers.

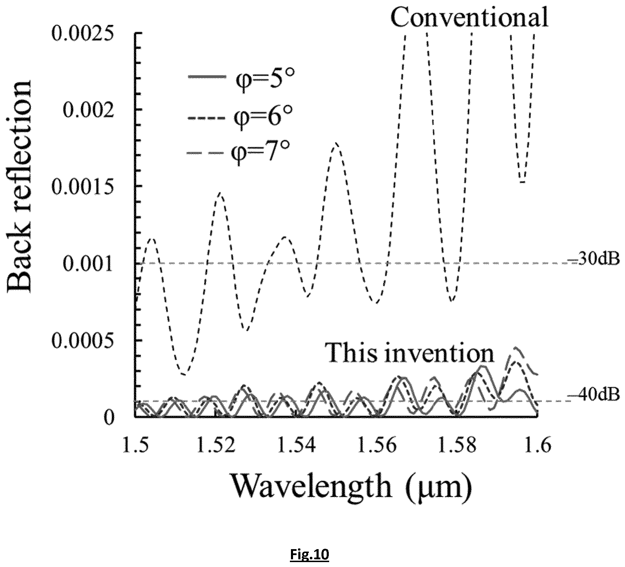

To find minimum back-reflection on the proposed grating couplers, various shapes of grating couplers were simulated with varying angle $\varphi$, being the difference in angle of arc between two subsequent grating trenches, as a parameter. Fig.9 shows the optimization of back-reflections for an exemplary embodiment. The minimum back-reflection was found to be about -41 dB within 1 dB bandwidth when $\varphi$ is 5 degrees. For comparison, the back-reflection of a conventional grating coupler is on average -29 dB at 1dB bandwidth. Fig.10 illustrates optimized back reflection spectra from the proposed solution and a conventional grating coupler.

In the practical case of a grating coupler on SOI, the buried oxide (BOX) layer is critical for the directionality. A typical SOI grating coupler structure has silicon substrate under the BOX layer of 2$\mu$m. Therefore, actual fibre coupling efficiencies are different from the substrateless structures used in simulations. As mentioned, for fast calculations substrateless structures with perfectly matched layer boundary conditions have been used here. However, relative values can be accurately used for the comparison between the conventional and the proposed grating couplers, where having same conditions such as the pitch of 630nm with 50% duty cycle and 70nm etched trenches. Fig.10 shows the fibre coupling efficiencies of proposed grating couplers. The fibre mode size is assumed to be 10$\mu$m in diameter at 1.55$\mu$m. The output fibre is commonly tilted as 10 degree in y-direction ($\theta$x) and 10, 8, and 5 degree-tilted in x-direction ($\theta$y) for $\varphi$ of 5, 6, and 7 degrees, respectively. The maximum penalty of fibre coupling efficiency was found to be 0.3dB. It shows that no critical penalty in the fibre coupling efficiency occurs.

The proposed photonic integrated device comprising a waveguide and grating coupler with low back-reflections can advantageously be used for various transceiver applications in telecommunications and data communications, biosensing etc.

While the invention has been illustrated and described in detail in the drawings and foregoing description, such illustration and description are to be considered illustrative or exemplary and not restrictive. The foregoing description details certain embodiments of the invention.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

## Claims

1. Photonic integrated device (1) comprising

   - a grating structure (4),
   - a waveguide (2) embedded in a photonic substrate having a waveguide radiation exit surface (3) and being in optical communication with said grating structure (4) via the waveguide radiation exit surface (3) and a slab area,
   - said grating structure having a plurality of curved elongate grating trenches (5) adapted for diffracting radiation from said waveguide, **characterized in that** a subset of the plurality of the curved elongate grating trenches has a difference in angle of arc ($\varphi$) with respect to the centre of said waveguide radiation exit surface (3) between two subsequent grating trenches such that a curved boundary is defined by the subset of the plurality of the curved elongate grating trenches and the light from the waveguide (2) is reflected by the curved boundary as a curved mirror, thereby reducing back reflection.

2. Photonic integrated device according to claim 1, wherein said photonic substrate is a silicon-on-insulator substrate.

3. Photonic integrated device according to any of the previous claims, comprising monolithically integrated optical components.

4. Photonic integrated device according to any of the previous claims, comprising heterogeneously integrated optical components.

5. Optical system for guiding radiation, said optical system comprising a photonic integrated device according to any of the previous claims and an optical fibre in optical communication with the photonic integrated device in order to collect radiation directed from the waveguide (2) by the grating structure.

**Patentansprüche**

1. Photonische integrierte Vorrichtung (1), umfassend:

   - eine Gitterstruktur (4),
   - einen Wellenleiter (2), der in einem photonischen Substrat eingebettet ist, das eine Wellenleiter-Strahlungsaustrittsoberfläche (3) aufweist und über die Wellenleiter-Strahlungsaustrittsoberfläche (3) und einen Plattenbereich mit der Gitterstruktur (4) in optischer Verbindung steht,
   - wobei die Gitterstruktur eine Vielzahl von gekrümmten länglichen Gittergräben (5) aufweist, die zum Beugen von Strahlung aus dem Wellenleiter adaptiert sind, **dadurch gekennzeichnet, dass** eine Teilmenge der Vielzahl von gekrümmten länglichen Gittergräben einen Unterschied in dem Bogenwinkel ($\varphi$) in Bezug auf die Mitte der Wellenleiter-Strahlungsaustrittsoberfläche (3) zwischen zwei aufeinanderfolgenden Gittergräben derart aufweist, dass eine gekrümmte Grenze durch die Teilmenge der Vielzahl von gekrümmten länglichen Gittergräben definiert wird, und das Licht von dem Wellenleiter (2) von der gekrümmten Grenze als ein gekrümmter Spiegel reflektiert wird, wodurch Rückspiegelung reduziert wird.

2. Photonische integrierte Vorrichtung nach Anspruch 1, wobei das photonische Substrat ein Silizium-auf-Isolator-Substrat ist.

3. Photonische integrierte Vorrichtung nach einem der vorstehenden Ansprüche, die monolithisch integrierte optische Komponenten umfasst.

4. Photonische integrierte Vorrichtung nach einem der vorstehenden Ansprüche, die heterogen integrierte optische Komponenten umfasst.

5. Optisches System zum Leiten von Strahlung, wobei das optische System eine photonische integrierte Vorrichtung nach einem der vorstehenden Ansprüche und eine Lichtleitfaser in optischer Verbindung mit der photonischen integrierten Vorrichtung umfasst, um Strahlung, die von dem Wellenleiter (2) durch die Gitterstruktur gelenkt wird, zu sammeln.

**Revendications**

1. Dispositif intégré photonique (1) comprenant

   - une structure de réseau (4),
   - un guide d'ondes (2) incorporé dans un substrat photonique présentant une surface de sortie de rayonnement de guide d'ondes (3) et étant en communication optique avec ladite structure de réseau (4) via la surface de sortie de rayonnement de guide d'ondes (3) et une zone de dalle,
   - ladite structure de réseau présentant une pluralité de tranchées de réseau allongées incurvées (5) adaptées pour diffracter ledit rayonnement provenant dudit guide d'ondes, **caractérisé en ce qu'**un sous-ensemble de la pluralité des tranchées de réseau allongées incurvées présente une différence d'angle d'arc ($\varphi$) par rapport au centre de ladite surface de sortie de rayonnement de guide d'ondes (3) entre deux tranchées de réseau suivantes de sorte qu'une limite incurvée est définie par le sous-ensemble de la pluralité des tranchées de réseau allongées incurvées et la lumière provenant du guide d'ondes (2) est réfléchie par la limite incurvée en tant que miroir incurvé, en réduisant ainsi une réflexion arrière.

2. Dispositif intégré photonique selon la revendication 1, dans lequel ledit substrat photonique est un substrat de silicium sur isolant.

3. Dispositif intégré photonique selon l'une quelconque des revendications précédentes, comprenant des composants optiques intégrés de manière monolithique.

4. Dispositif intégré photonique selon l'une quelconque des revendications précédentes, comprenant des composants optiques intégrés de manière hétérogène.

5. Système optique de guidage de rayonnement, ledit système optique comprenant un dispositif intégré photonique selon l'une quelconque des revendications précédentes et une fibre optique en communication optique avec le dispositif intégré photonique afin de collecter un rayonnement dirigé depuis le guide d'ondes (2) par la structure de réseau.

EP 3 296 783 B1

**Fig.1**

**Fig.2**

11

**Fig.3**

**Fig.4**

**Fig.5**

**Fig.6**

**Fig.7**

**Fig.8**

**Fig.9**

**Fig.10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013037900 A

**Non-patent literature cited in the description**

- **N. NA et al.** Efficient broadband silicon-on-insulator grating coupler with low backreflection. *Opt. Letters,* 2011, vol. 36 (11), 2101-2103